# EUROPÄISCHE PATENTSCHRIFT

(11) **EP 1 854 555 B1**
(45) Veröffentlichungstag und Bekanntmachung des Hinweises auf die Patenterteilung: **09.12.2009**
(21) Anmeldenummer: 07009249.9
(22) Anmeldetag: 08.05.2007
(51) Int. Cl.: B07C 5/02, B65G 47/31

(54) **Verfahren und Vorrichtung zur Sortierung von Behältnissen**
Process and device for sorting containers
procédé et dispositif pour trier des récipients

(30) Priorität: 09.05.2006 DE 102006021618
(43) Veröffentlichungstag der Anmeldung: 14.11.2007
(73) Patentinhaber: SpiralTrans Streley AB, 793 35 Leksand (SE)
(72) Erfinder: Büchi, Jakob, 2034 Peseux (CH); Schmutz, Urs, 79392 Leksand (SE); Winkelmüller, Serge, 57520 Grosbliderstroff (FR)
(74) Vertreter: Löfgren, Jonas

(56) Entgegenhaltungen:
- EP-A1- 0 838 275
- WO-A-01/58604

## Beschreibung

Die Erfindung betrifft ein Verfahren zur automatischen Sortierung von Behältnissen, insbesondere Säcke, Kisten, Kartons oder ähnliche verschlossene Behältnissen jeglicher Form, unterschiedlicher Kategorie in einer Anlage, in der die Behältnisse durch sich drehende wellenlose Spiralen in einem geschlossenen System gefördert werden, wobei die Förderspiralen in wannenförmige Gehäuse genau eingepasst sind, so dass die Behältnisse nicht durch die zur Förderung und Sortierung nötige Krafteinwirkung zerstört werden, und die Sortierung durch eine Ausfuhr der Behältnisse gleicher Kategorie aus der Förderspirale an einer kategoriespezifischen Stelle realisiert wird, sowie eine Vorrichtung zur Durchführung des Verfahrens. Das hier beschriebene Verfahren und die zugehörige Vorrichtung dient dem Sortieren von Müllsäcken unterschiedlicher Kategorie, kann aber ebenso für jede andere Sortieraufgabe von geschlossenen Behältnissen jeglicher Form angewandt werden.

Bei der Entsorgung von Haushaltsabfall reduziert sich der kommunale Aufwand deutlich, wenn der Müll bereits in den Einzelhaushalten in Kategorien getrennt wird. Schon heute wird in den Einzelhaushalten zuverlässig in die Kategorien Metall, Glas, Papier, Verpackung, biologische Abfälle und Restmüll getrennt. Die Trennung im Einzelhaushalt ist aber nur bedingt günstiger, wenn der Aufwand der Kommunen in einer getrennten Einsammlung der verschiedenen Müllkategorien trotzdem entsteht. Metall, Glas und Papier wird daher normalerweise von den Verursachern direkt zu einer zentral gelegenen Sammelstelle gebracht, während eine Trennung von Verpackung, biologischer Abfälle und Restmüll in geschlossene Behältnisse (zum Beispiel verschließbare Müllsäcke verschiedener Farbe) im Einzelhaushalt durchgeführt werden kann.

Wird der Müll der angesprochenen Kategorien jeweils in verschließbare verschiedenfarbige Behältnisse getrennt, kann die Sammlung aller Behältnisse unabhängig vom Inhalt erfolgen. Die verschlossenen Behältnisse halten die jeweilige Müllkategorie auch während eines gemeinsamen Transports zusammen. An der zentralen Sammelstelle müssen die Behältnisse verschiedener Kategorie allerdings wieder in die jeweiligen Kategorie getrennt werden, um den Müll jeweils spezifisch entsorgen beziehungsweise weiterverarbeiten zu können.

Ein derartiges Sortierverfahren sollte möglichst automatisch in einer geschlossenen Anlage durchgeführt werden, um Kosten und Geruchsbelästigung der Umgebung möglichst gering zu halten. Eine Vorrichtung zur Durchführung eines derartigen Verfahrens wurde bereits in W00158604 beschrieben.

Der Müll wird als Mischung geschlossener verschiedenfarbiger Behältnisse aller Kategorien in die Anlage eingebracht und mittels Förderbänder in Sortierstrecken gefördert. Die Sortierstrecken bestehen aus Förderstrecken, in denen die Behältnisse mittels sich drehender, in ein wannenförmiges Gehäuse eingepasster, wellenloser Spiralen, gefördert werden. Die Behältnisse sind in der Förderspirale so gemischt, wie sie durch die Förderbänder in die Spirale eingebracht wurden. Im Gegensatz zum Förderband befinden sie sich aber in einer definierten Position zwischen den Steigungen der Spiralwindungen. Mit der Förderspirale werden die Behältnisse an einem Erkennungssystem (zum Beispiel Kamera) vorbeigeführt, das die Farbe des Behältnisses und somit die Müllkategorie identifiziert und die Ausführung der Behältnisse über eine Öffnung an einer kategoriespezifischen Stelle am Boden des wannenförmigen Gehäuses auslöst.

Die Schwierigkeiten der beschriebenen Einrichtung zur Sortierung von Behältnissen in die jeweiligen Kategorien liegen in der präzisen Ausführung der Behältnisse der jeweiligen Kategorie aus der Förderspirale. Für eine eindeutige Identifikation der Kategorie durch das Erkennungssystem ist es zwingend notwendig, dass die Behältnisse das Erkennungssystem einzeln und mit einem hinreichend großen Abstand passieren. Die Überlagerung zweier Behältnisse verschiedener Kategorie führt zu einer Überlagerung der Identifikationssignale und somit zu keiner eindeutigen Zuordnung. Ebenso muss der Abstand zwischen den Behältnissen verschiedener Kategorie hinreichend groß sein, um ein Öffnen und Schließen der Bodenöffnung vor dem Eintreffen des nächsten Behältnisses anderer Kategorie zu ermöglichen, da sonst auch eindeutig identifizierte Behältnisse durch die gleiche Öffnung ausgeführt und damit fehlsortiert würden. Eine zuverlässige Sortierung ist somit eindeutig mit dem Abstand der zu sortierenden Behältnisse untereinander am Erkennungssystem und der jeweiligen Stelle zur Ausführung der Behältnisse verknüpft.

Der Erfindung liegt daher die Aufgabe zugrunde, ein Verfahren der eingangs erwähnten Art sowie eine Vorrichtung zur Durchführung derart auszugestalten, dass die Zuverlässigkeit der Sortierung der Behältnisse in die jeweilige Kategorie deutlich erhöht wird.

Diese Aufgabe wird verfahrensseitig dadurch gelöst, dass die Behältnisse vor der Ausführung vereinzelt werden, indem die Behältnisse mindestens einmal aus einer Förderspirale in eine nächste, aufnehmende Förderspirale überführt werden, wobei die aufnehmende Förderspirale bei einer höheren Drehgeschwindigkeit als die abgebende Förderspirale betrieben wird.

Bei der Einfüllung der Behältnisse in die Förderspirale werden die Behältnisse durch die vorgegebene Wellenstruktur der Förderspirale schon ziemlich vereinzelt. Bei der Übergabe der Behältnisse von einer Förderspirale in eine Förderspirale, die bei höherer Drehgeschwindigkeit betrieben wird, erhöht sich die Wahrscheinlichkeit noch mal deutlich, das die übergebenen Behältnisse jeweils in verschiedenen Windungen der Spirale landen bzw. wird der Abstand zwischen Behältnisse aus benachbarten Spiralwindungen deutlich erhöht. Dadurch wird eine eindeutige Identifizierung der Behältnisse durch das Erkennungssystem gewährleistet und sichergestellt, dass die kategoriespezifische Öffnung nach der Ausfuhr eines Behältnisses der entsprechenden Kategorie rechtzeitig vor dem Eintreffen eines Behältnisses anderer Kategorie wieder verschlossen wird.

In einer besonders bevorzugten Ausführungsform der Erfindung wird die Ausfuhr durch ein Erkennungssystem ausgelöst wird, das ein Radiofrequenz Identifikationssignal (RFID) zur Identifizierung der Kategorie verwendet.

Ein Radiofrequenz Identifikationssignal System besteht im Wesentlichen aus einem Transponder, einer Sende-Empfangs Einheit und einem computergestützten Steuerungssystem (siehe http://de.wikipedia.org/wiki/RFID). Von der Sende-Empfangs Einheit wird ein elektromagnetisches Hochfrequenzfeld erzeugt, welches die Antenne des RFID-Transponders empfängt. In der Antennenspule entsteht, sobald sie in die Nähe des elektromagnetischen Feldes kommt, Induktionsstrom. Dieser aktiviert den Mikrochip im Transponder. Ist der Mikrochip einmal aktiviert, so empfängt er vom Lesegerät Befehle. Indem der Transponder eine Antwort in das von der Sende-Empfangs Einheit ausgesendete Feld moduliert, sendet er seine Seriennummer oder andere von der Sende-Empfangs Einheit abgefragte Daten. Die Herstellungskosten der Transponder und Sende-Empfangs Einheit belaufen sich zurzeit auf 5-10 Cent in der Massenproduktion und werden künftig noch deutlich sinken.

Die Behältnisse werden mit einem Transponder ausgestattet, so dass die jeweilige Kategorie der Behältnisse unabhängig vom Verschmutzungsgrad zuverlässig durch das eindeutige Auslesen der Kategorieinformation mittels RFID identifizieren identifiziert und die Ausfuhr der Behältnisse aus der Förderspirale präzise gesteuert werden kann.

Des Weiteren erfolgt in der bevorzugten Ausführungsform der Erfindung die Ausfuhr der Behältnisse über eine Bodenplatte nach unten, wobei die Bodenplatte entweder über einen Schub- oder Klappmechanismus geöffnet wird. Nach der Ausfuhr über die Öffnung aus der Förderspirale gelangen die Behältnisse entweder direkt in die Sammeleinrichtung ihrer jeweiligen Kategorie oder werden bevorzugt über eine weitere Förderspirale in ihre jeweiligen Sammeleinrichtungen geführt. Um eine gleichmäßige Verteilung der Behältnisse in ihrer jeweiligen Sammeleinrichtung zu gewährleisten, werden die Behältnisse bevorzugt über sich periodisch öffnende und schließende Öffnungen, die über die gesamte Länge der Förderspiral über der Sammeleinrichtung verteilt sind, aus der Förderspirale ausgeführt. Eventuell aus den Behältnissen ausgetretenes loses Material wird vorteilhafterweise über ein Sieb am Boden des wannenförmigen Gehäuses in eine separate Sammeleinrichtung ausgeführt. Zur optimalen Anpassung der Anlage an die jeweilige Zahl der Behältnisse, die Zahl der möglichen Kategorien und den Durchmischungsgrad werden die jeweilige Drehzahl und die Geschwindigkeit der Öffnungs- und Schließungsvorgänge zweckmäßigerweise separat gesteuert.

In weiteren Ausgestaltung der Erfindung wird zur Identifizierung der Kategorie der Behältnisse im Erkennungssystem zusätzlich zum RFID-system eine Kamera, ein Magnetkartenerkennungssystem und/oder ein Strichcodeerkennungssystem verwendet, um auch Behältnisse mit verlorenem oder beschädigtem Transponder identifizieren zu können.

Vorrichtungsseitig wird die gestellte Aufgabe dadurch gelöst, dass die Einrichtung mindestens einen Punkt aufweist, an dem sich das Ende von einer Behältnisse abgebenden Förderspirale mit dem Anfang einer Behältnisse aufnehmenden Förderspirale höherer Drehgeschwindigkeit überlappt.

In einer bevorzugten Ausführungsform der Erfindung ist die Einrichtung zum Auslösen der Ausfuhr mit einer Einrichtung zur Identifikation der Kategorie gekoppelt ist, die eine Sende-Empfangs Einheit zum Abruf und zur Verarbeitung eines Radiofrequenz Identifikationssignales (RFID) enthält. Zweckmäßigerweise befinden sich im wannenförmigen Gehäuse nach unten öffnende Bodenplatten zur Ausführung der Behältnisse über den Sammeleinrichtungen der jeweiligen Kategorie oder über Förderspiralen die zu den Sammeleinrichtungen der jeweiligen Kategorie führen. Bevorzugt verfügen die Öffnungen über einen Schub- oder Klappmechanismus. Die Förderspirale zur jeweiligen Sammeleinrichtung nach der Sortierung in die jeweilige Kategorie verfügt zweckmäßigerweise über mehrere Öffnungen im Boden verteilt über die Länge der Förderspirale über der Sammeleinrichtung, die periodisch geöffnet und geschlossen werden, um so die Behältnisse über die gesamte Sammeleinrichtung zu verteilen. Am Anfang der Sortierstrecke befindet sich bevorzugt ein Sieb am Boden des wannenförmigen Gehäuses zum Aussieben von losem Material.

In einer weiteren Ausführungsform der Erfindung verfügt die Einrichtung zur Identifikation der Kategorie zusätzlich zum RFID-system über eine Kamera, eine Einrichtung zur Magnetkartenerkennung und/oder eine Einrichtung zur Strichcodeerkennung aufweist, wodurch auch Behältnisse mit beschädigtem oder verlorenem Transpondem richtig identifiziert und sortiert werden können.

Mit der vorliegenden Erfindung gelingt es insbesondere Behältnisse verschiedener Kategorie effizient mit einer sehr geringen Fehlerquote zu sortieren, wodurch die Wirtschaftlichkeit der Sortieranlage deutlich erhöht wird.

Im Folgen soll die Erfindung anhand des in den Figuren dargestellten Ausführungsbeispiels näher erläutert werden.

Es zeigen
- Figur 1: eine Sortieranlage mit Behältnissen aus zwei verschiedenen Kategorien in der Aufsicht
- Figur 2: eine Sortieranlage mit Behältnissen aus zwei verschiedenen Kategorien in der Seitenansicht

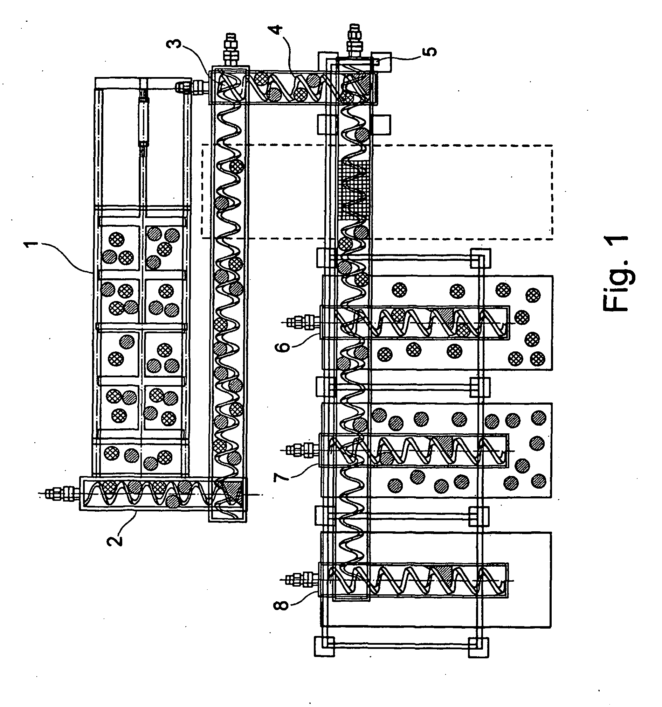

Wie in Figur 1 dargestellt, werden die Behältnisse in den beiden unterschiedlichen Kategorien aus dem Aufnahmeraum (1) in die erste Förderspirale (2) dosiert. Die Dossierung der Behältnisse erfolgt über die Regulation der Aufgabegeschwindigkeit zum Beispiel über die Regulation der Geschwindigkeit eines Schubbodens. Durch die Übergabe der Behältnisse von der ersten Förderspirale zur zweiten und dritten Förderspirale (2, 3, 4), die sich jeweils mit höherer Drehzahl als die jeweils abgebende Spirale drehen, wird sichergestellt, dass sich jeweils nur ein Behältnis in einer Spiralwindung befindet und sich der Abstand zwischen den Behältnisse in den einzelnen Spiralwindungen erhöht. So wird ein optimales Wirken des Identifizierungs- und Ausführungssystems gewährleistet. Mit der vierten Förderspirale beginnt die eigentliche Sortierstrecke (5). Die Behältnisse der beiden Kategorien passieren das Identifizierungssystem (RFID) vor der Förderspirale (6), welches die jeweilige Kategorie erkennt und entsprechend die Ausführung aus der Förderspirale (5) auslöst. Werden Behältnisse der hell dargestellten Kategorie identifiziert, wird die Öffnung der Bodenplatte über der Förderspirale (6) ausgelöst. Nach einer von der Drehgeschwindigkeit der Förderspirale (5) und der Kategorie der als nächstes identifizierten Behältnisse abhängigen Zeit wird die Bodenplatte wieder verschlossen. Bei Identifizierung von Behältnissen der dunkel dargestellten Kategorie wird entsprechend der noch benötigten Laufzeit der Behältnisse in der Förderspirale die Öffnung der Bodenplatte über der Förderspirale (7) ausgelöst. Loses Material, das nicht durch das Sieb zwischen Position (5) und (6) ausgesiebt wurde, wird ebenso wie unidentifiziertes und bisher unaussortiertes Material in die Förderspirale (8) ausgeführt. Die Förderspiralen (6, 7, 8) sorgen durch sich periodisch öffnende Bodenplatten verteilt über die Länge der Förderspiralen über den jeweiligen Sammeleinrichtungen für eine gleichmäßige Verteilung des Materials in die entsprechenden Sammeleinrichtungen.

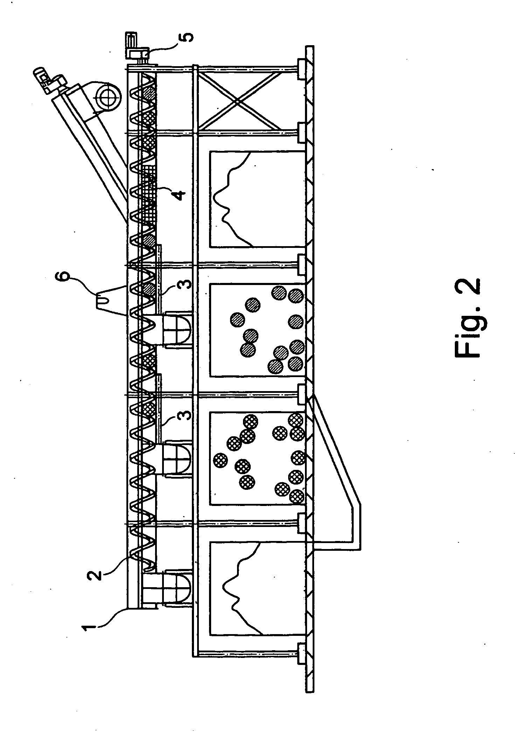

Figur 2 zeigt die Sortieranlage in der Seitenansicht. Dargestellt sind die eigentliche Sortierstrecke (5) mit dem Sieb zur Ausfuhr von losem Material aus der Förderspirale (4), das RFID-Identifikationssystem (6) und die sich öffnenden und schließenden Bodenplatten zur Ausfuhr der Behältnisse der jeweiligen Kategorie (3).

## Patentansprüche

1. Verfahren zur automatischen Sortierung von Behältnissen, insbesondere Säcke, Kisten, Kartons oder ähnliche verschlossene Behältnisse jeglicher Form, unterschiedlicher Kategorie in einer Anlage, in der die Behältnisse durch sich drehende wellenlose Spiralen in einem geschlossenen System gefördert werden, wobei die Förderspiralen (2,3,4) in wannenförmige Gehäuse genau eingepasst sind, so dass die Behältnisse nicht durch die zur Förderung und Sortierung nötige Krafteinwirkung zerstört werden, und die Sortierung durch eine Ausfuhr der Behältnisse gleicher Kategorie aus der Förderspirale an einer kategoriespezifischen Stelle realisiert wird, **dadurch gekennzeichnet, dass** die Behältnisse vor der Ausführung vereinzelt werden, indem die Behältnisse mindestens einmal aus einer Förderspirale (2,3) in eine nächste, aufnehmende Förderspirale (3,4) überführt werden, wobei die aufnehmende Förderspirale bei einer höheren Drehgeschwindigkeit als die abgebende Förderspirale betrieben wird.

2. Verfahren nach Anspruch 1, **dadurch gekennzeichnet, dass** die Ausfuhr durch ein Erkennungssystem ausgelöst wird, das ein Radiofrequenz Identifikationssignal (RFID) zur Identifizierung der Kategorie verwendet.

3. Verfahren nach einem der Ansprüche 1 oder 2, **dadurch gekennzeichnet, dass** die Ausfuhr der Behältnisse aus der Förderspirale an den kategoriespezifischen Stellen über eine Bodenplatte nach unten erfolgt, wobei die Bodenplatte entweder über einen Schub- oder Klappmechanismus geöffnet und wieder verschlossen wird.

4. Verfahren nach einem der Ansprüche 1 bis 3, **dadurch gekennzeichnet, dass** die Behältnisse nach der kategoriespezifischen Ausfuhr aus der Förderspirale direkt in die Sammeleinrichtung der jeweiligen Kategorie gelangen oder über eine weitere Förderspirale in die Sammeleinrichtung der jeweiligen Kategorie transportiert werden.

5. Verfahren nach Anspruch 4, **dadurch gekennzeichnet, dass** die Behältnisse nach der Sortierung in verschiedene Kategorien aus den Förderspiralen zur Sammeleinrichtung der jeweiligen Kategorie durch mehrere Öffnungen im Boden verteilt über die Länge der Förderspirale über der Sammeleinrichtung ausgeführt werden, die periodisch geöffnet und geschlossen werden.

6. Verfahren nach einem der Ansprüche 1 bis 5, **dadurch gekennzeichnet, dass** am Anfang der Sortierstrecke nicht in den Behältnissen enthaltenes loses Material über ein Sieb am Boden des wannenförmigen Gehäuses ausgeführt wird.

7. Verfahren nach einem der Ansprüche 1 bis 6, **dadurch gekennzeichnet, dass** zur Identifizierung der Kategorie der Behältnisse im Erkennungssystem zusätzlich zum RFID-system eine Kamera, ein Magnetkartenerkennungssystem und/oder ein Strichcodeerkennungssystem verwendet wird.

8. Verfahren nach einem der Ansprüche 1 bis 7, **dadurch gekennzeichnet, dass** die Geschwindigkeit aller Spiralen ebenso wie die Geschwindigkeit der Öffnung und Schließung der Bodenplatte gesteuert und an die jeweilige Zahl der Behältnisse, die Zahl der möglichen Kategorien und den Durchmischungsgrad angepasst wird.

9. Vorrichtung zur automatischen Sortierung von Behältnissen, insbesondere Säcke, Kisten, Kartons oder ähnliche verschlossene Behältnisse jeglicher Form, unterschiedlicher Kategorie in einer Anlage, in der die Behältnisse durch sich drehende wellenlose Spiralen (2,3,4) die in wannenförmige Gehäuse genau eingepasst sind, in einem geschlossenen System gefördert werden, und einer Einrichtung zur Ausfuhr der Behältnisse gleicher Kategorie aus der Förderspirale an einer kategoriespezifischen Stelle, **dadurch gekennzeichnet, dass** die Einrichtung mindestens einen Punkt aufweist, an dem sich das Ende von einer Behältnisse abgebenden Förderspirale (2,3) mit dem Anfang einer Behältnisse aufnehmenden Förderspirale (3,4) höherer Drehgeschwindigkeit überlappt.

10. Vorrichtung nach Anspruch 9, **dadurch gekennzeichnet, dass** die Einrichtung zum Auslösen der Ausfuhr mit einer Einrichtung zur Identifikation der Kategorie gekoppelt ist, die eine Sende-Empfangs Einheit zum Abruf und zur Verarbeitung eines Radiofrequenz Identifikationssignales (RFID) enthält.

11. Vorrichtung nach einem der Ansprüche 9 oder 10, **dadurch gekennzeichnet, dass** sich im wannenförmigen Gehäuse eine nach unten öffnende Bodenplatte zur Ausführung der Behältnisse befindet, die über einen Schub- oder Klappmechanismus verfügt.

12. Vorrichtung nach einem der Ansprüche 9 bis 11, **dadurch gekennzeichnet, dass** sich unter der Bodenplatte die Sammeleinrichtung für die jeweilige Kategorie Behältnisse oder eine Förderspirale zur Sammeleinrichtung der jeweiligen Kategorie Behältnisse befindet.

13. Vorrichtung nach Anspruch 12, **dadurch gekennzeichnet, dass** die Förderspirale zur Sammeleinrichtung mehrere Öffnungen im Boden verteilt über die Länge der Förderspirale über der Sammeleinrichtung aufweist, die sich periodisch öffnen und schließen.

14. Vorrichtung nach einem der Ansprüche 9 bis 13, **dadurch gekennzeichnet, dass** sich ein Sieb zum Aussieben von losem Material am Anfang der Sortierstrecke auf dem Boden des wannenförmigen Gehäuses befindet.

15. Vorrichtung nach einem der Ansprüche 9 bis 14, **dadurch gekennzeichnet, dass** die Einrichtung zur Identifikation der Kategorie zusätzlich zum RFID-system eine Kamera, eine Einrichtung zur Magnetkartenerkennung und/oder eine Einrichtung zur Strichcodeerkennung aufweist.

16. Vorrichtung nach einem der Ansprüche 9 bis 15, **dadurch gekennzeichnet, dass** die Vorrichtung eine Einrichtung zur unabhängigen Regulation der Drehzahl aller Förderspiralen und zur Regulation der Geschwindigkeit des Öffnens und Schließens der Bodenöffnungen aufweist.

## Claims

1. A method for automatic sorting of containers, particularly sacks, cases, cardboard boxes or similar closed containers of any shape, of different categories in a plant, in which the containers are conveyed by means of rotating shaftless spirals in a closed system, the conveyor spirals (2, 3, 4) being accurately fitted into trough-shaped casing so that the containers will not be destroyed by the force influence required for the conveying and sorting, and the sorting is carried out by a discharge of the containers of the same category from the conveyor spiral at a category-specific place, **characterized in that** the containers are separated from each other before the discharge by being transferred at least once from one conveyor spiral (2, 3) to a next following receiving conveyor spiral (3, 4), the receiving conveyor spiral being driven at a higher rotational speed than the leaving conveyor spiral.

2. A method according to claim 1, **characterized in that** the discharge is triggered by a recognition system, which uses a radio frequency identification signal (RFID) for identification of the category.

3. A method according to claim 1 or 2, **characterized in that** the discharge of the containers from the conveyor spiral at the category-specific places is effected through a bottom plate downwards, the bottom plate being opened and reclosed either by a slide mechanism or flap mechanism.

4. A method according to any of claims 1 to 3, **characterized in that** the containers after the category-specific discharge from the conveyor spiral arrive directly in the collecting device for the prevailing category or are transported by a further conveyor spiral to the collecting device for the prevailing category.

5. A method according to claim 4, **characterized in that** the containers after the sorting in different categories are discharged from the conveyor spirals to the collecting device for the prevailing category through several openings in the bottom distributed over the length of the conveyor spiral above the collecting device, which openings are periodically opened and closed.

6. A method according to any of claims 1 to 5, **characterized in that** loose material which is not contained in the containers at the beginning of the sorting section is discharged through a screen at the bottom of the trough-shaped casing.

7. A method according to any of claims 1 to 6, **characterized in that** a camera, a magnetic card recognition system and/or a bar code recognition system is used in the recognition system in addition to the RFID-system for identification of the category of the containers.

8. A method according to any of claims 1 to 7, **characterized in that** the speed of all spirals and the speed for the opening and closing of the bottom plate is controlled and adapted to the prevailing number of containers, the number of possible categories and the degree of mixing.

9. A device for automatic sorting of containers, particularly sacks, cases, cardboard boxes or similar closed containers of any shape, of different categories in a plant, in which the containers are conveyed in a closed system by means of rotating shaftless spirals (2, 3, 4), which are accurately fitted into trough-shaped casing, and an arrangement for discharge of the containers of the same category from the conveyor spiral at a category-specific place, **characterized in that** the arrangement has at least one spot where the end of a container-leaving conveyor spiral (2, 3) overlaps the beginning of a container-receiving conveyor spiral (3, 4), which has a higher rotational speed.

10. A device according to claim 9, **characterized in that** the arrangement for triggering the discharge is connected to an arrangement for identification of the category, which comprises a transmitter-receiver unit for retrieving and processing a radio frequency identification signal (RFID).

11. A device according to claim 9 or 10, **characterized in that** a bottom plate which is opened downwards is located in the trough-shaped casing for discharge of the containers, which bottom plate is provided with a slide mechanism or flap mechanism.

12. A device according to any of claims 9 to 11, **characterized in that** the collecting device for the prevailing category of containers or a conveyor spiral to the collecting device for the prevailing category of containers is located under the bottom plate.

13. A device according to claim 12, **characterized in that** the conveyor spiral to the collecting device is provided with several openings in the bottom distributed over the length of the conveyor spiral above the collecting device, which openings open and close periodically.

14. A device according to any of claims 9 to 13, **characterized in that** a screen for screening out loose material is located at the beginning of the sorting section on the bottom of the trough-shaped casing.

15. A device according to any of claims 9 to 14, **characterized in that** the arrangement for identification of the category in addition to the RFID-system comprises a camera, an arrangement for magnetic card recognition and/or an arrangement for bar code recognition.

16. A device according to any of claims 9 to 15, **characterized in that** the device comprises an arrangement for independent regulation of the speed of rotation of all conveyor spirals and for regulation of the speed for opening and closing of the bottom openings.

## Revendications

1. Procédé pour le triage automatique de récipients, en particulier des sacs, des caisses, des cartons ou des récipients fermés analogues de forme diverse, de catégorie différente dans une installation, dans laquelle les récipients sont entraînés par des spirales rotatives sans arbre dans un système fermé, où les spirales d'entraînement (2, 3, 4) sont ajustées précisément dans des logement formant carters, de telle façon que les récipients ne soient pas endommagés par l'action nécessaire à l'entraînement et au triage, et le triage étant réalisé par une évacuation des récipients de même catégorie de la spirale d'entraînement dans une place spécifique par catégorie, **caractérisé en ce que** les récipients sont séparés avant l'évacuation, en transférant les récipients au moins une fois d'une spirale d'entraînement (2, 3) à une spirale entraînement réceptionnant (3, 4) suivante, où la spirale d'entraînement réceptionnant est entraînée à une vitesse de rotation plus élevée que celle de la spirale d'entraînement donnant.

2. Procédé selon la revendication 1, **caractérisé en ce que** l'évacuation est déclénché par un système de reconnaissance qui utilise un signal d'identification par radiofréquence (RFID) pour l'identification des catégories.

3. Procédé selon la revendication 1 ou 2, **caractérisé en ce que** l'évacuation des récipients est réalisé à partir de la spirale d'entraînement en des places spécifiques par catégorie par une plaque de base vers le bas, où la plaque de base s'ouvrit et se referme soit par un mécanisme de poussée soit par un mécanisme rabattable.

4. Procédé selon l'une des revendications 1 à 3, **caractérisé en ce que** les récipients sont transportés après l'évacuation spécifique par catégorie de la spirale d'entraînement directement dans l'installation de collecte de la catégorie actuelle ou bien par une autre spirale d'entraînement dans l'installation de collecte de la catégorie actuelle.

5. Procédé selon la revendication 4, **caractérisé en ce que** les récipients sont évacués après le triage dans des catégories différentes des spirales d'entraînement jusqu'à l'installation de collecte de la catégorie actuelle à travers plusieurs ouvertures distribuées dans le fond sur la longueur de la spirale d'entraînement au-dessus de l'installation de collecte, qui sont fermées et ouvertes périodiquement.

6. Procédé selon l'une des revendications 1 à 5, **caractérisé en ce qu'**à l'entrée de la piste de triage le matériau en vrac qui n'est pas contenu dans les récipients est évacué par un tamis au fond du logement formant carter.

7. Procédé selon l'une des revendications 1 à 6, **caractérisé en ce que** pour identifier les catégories de récipients on utilise dans le système de reconnaissance additionnel au système RFID une caméra, un système de reconnaissance de carte magnétique et/ou un système de reconnaissance de code à barres.

8. Procédé selon l'une des revendications 1 à 7, **caractérisé en ce que** la vitesse de toutes les spirales ainsi que la vitesse d'ouverture et de fermeture de la plaque de fond est contrôlée et est ajustée suivant le nombre actuel de récipients, le nombre de catégories possibles et le degré de mélange.

9. Dispositif pour le triage automatique de récipients, en particulier des sacs, des caisses, des cartons ou des récipients fermés analogues de forme diverse, de catégorie différente dans une installation, dans laquelle les récipients sont entraînés par des spirales rotatives sans arbre (2, 3, 4), qui sont ajustées précisément dans le logement formant carter, dans un système fermé, et un équipement pour évacuer les récipients de la même catégorie de la spirale d'entraînement dans une place spécifique par catégorie, **caractérisé en ce que** l'équipement comprend au moins un point au niveau duquel l'extrémité d'une spirale d'entraînement (2, 3) donnant les récipients chevauche l'entrée d'une spirale d'entraînement (3, 4) réceptionnant les récipients, qui a une vitesse de rotation plus élevée.

10. Dispositif selon la revendication 9, **caractérisé en ce que** l'équipement pour déclencher l'évacuation est couplé à un équipement pour l'identification des catégories, qui comprend une unité d'émission-réception pour le retrait et pour le traitement d'un signal d'identification par radiofréquence(RFID).

11. Dispositif selon l'une des revendications 9 ou 10, **caractérisé en ce que** dans le logement formant carter il est disposée une plaque de fond s'ouvrant vers le bas pour évacuer les récipients, qui est pourvue d'un mécanisme de poussée ou un mécanisme rabattable.

12. Dispositif selon l'une des revendications 9 à 11, **caractérisé en ce que** l'installation de collecte pour les récipients de la catégorie actuelle ou bien une spirale d'entraînement pour l'installation de collecte des récipients de la catégorie actuelle est située en dessous de la plaque de fond.

13. Dispositif selon la revendication 12, **caractérisé en ce que** la spirale d'entraînement pour l'installation de collecte comprend plusieurs ouvertures distribuées dans le fond sur la longueur de la spirale d'entraînement au-dessus de l'installation de collecte, qui s'ouvrent et se ferment périodiquement.

14. Dispositif selon l'une des revendications 9 à 13, **caractérisé en ce qu'**un tamis pour tamiser le matériau en vrac est disposé à l'entrée de la piste de triage sur le fond du logement formant carter.

15. Dispositif selon l'une des revendications 9 à 14, **caractérisé en ce que** l'équipement pour identifier les catégories comprend en complément du système RFID une caméra, une installation de reconnaissance de carte magnétique et/ou une installation de reconnaissance de code à barres.

16. Dispositif selon l'une des revendications 9 à 15, **caractérisé en ce que** le dispositif comporte une installation pour la régulation indépendante de la vitesse de rotation de toutes spirales d'entraînement et pour la régulation de la vitesse d'ouverture et de fermeture des ouvertures du fond.
